# EUROPEAN PATENT APPLICATION

(11) **EP 0 885 688 A2**
(43) Date of publication of application: **23.12.1998**
(21) Application number: 98850104.5
(22) Date of filing: 10.06.1998
(51) Int. Cl.: B23Q 11/00, B23Q 17/00, B23Q 17/09, B23Q 1/58

(54) **Device for compensating the deformation of a machine element and possible supporting means**

(30) Priority: 12.06.1997 SE 9702262
(71) Applicant: Lidköping Machine Tools AB, S-531 19 Lidköping (SE)
(72) Inventor: Larsson, Sture, 531 55 Lidköping (SE)
(74) Representative: Westman, P. Börje I.

(57) **Abstract**

Device and method for compensating a non plastic deformation of a first machine element (2) and possible supporting means (7), said first machine element (2) at least comprising machining means (1) and being fixed to a second machine element (3) in linear operation at least comprising one feed slide (4) and one linear motor (5). The device is characterised in, that said feed slide (4) and linear motor (5) are arranged with position feed-back in a position closed loop configuration (6); said deformation is arranged to be substantially compensated by a linear movement of said second machine element (3) effected by said linear motor (5); and the extent of said linear movement being arranged to be based on current alterations in the winding of said linear motor (5), which are caused by forces exerted on said linear motor (5), said forces originating from the deformation of said first machine element (2) and said possible supporting means (7).

## Description

### TECHNICAL FIELD

The present invention relates to a device for compensating a non plastic deformation of a first machine element and possible supporting means, said first machine element at least comprising machining means and being fixed to a second machine element in linear operation at least comprising one feed slide and one linear motor. The invention also relates to methods for compensation and calibration of the device.

### BACKGROUND OF THE INVENTION

In many machines the linear feed slide is a vital element. The object of a feed slide is to provide a linear movement. Such feed slides can be parts of machines comprising only one feed slide and one simple feeding movement or a machine with several axes with several feed slides and CNC controlled feeding movements. The feeding movement of a feed slide is traditionally achieved by a ball screw, a rotatory servo-motor and a position measuring system comprised in a closed loop configuration.

For various reasons the highest possible stiffness is desired in the feeding direction of the slide. Due to the moveable mass of the slide and the stiffness of the feeding, mechanical resonance can occur in the frequency range where the resistance of the mass forces is of the same magnitude as the static stiffness of the slide. Within this frequency range considerable loss of stiffness can be found. This loss results in decreased performance of the present machine.

A linear motor in a position closed loop configuration can effectively substitute the traditional solution described above. The effect of the substitution is that such a slide will not present a passive stiffness but the stiffness in the machining zone must actively be added by the linear motor in the closed loop configuration. The machining zone is hereinafter defined as the area where the machining means is operative.

### PURPOSE OF THE INVENTION AND ITS MOST CHARACTERISING PARTS

The purpose of the present invention is to provide a device for compensating a non plastic deformation in machines, such as lathe machines, mills, grinding machines including centerless grinding machines, axial drilling and boring machines or any other machines involving linear feeding.

The purpose includes transferring the feed stiffness of a linear slide incorporating a linear motor in a position closed loop configuration to the machining (e.g. cutting) zone of a machine by continuously modifying the position reference input to the position closed loop by the amount of (electric) current supplied to the linear motor windings in order to compensate for the deflection of other machine elements than the linear slide itself, the deflection of those machine elements being caused by the linear feed movement of the linear slide and the machining process.

Characteristics of the device are that a feed slide and a linear motor are arranged with position feed-back in a position closed loop configuration, and a deformation of a machine element is arranged to be substantially compensated by a linear movement of a second machine element effected by a linear motor and the extent of the linear movement being arranged to be based on current alterations in the winding of the linear motor, which are caused by the interaction of a machining means, when being subjected to deformation, and the linear motor.

### DESCRIPTION OF THE DRAWINGS

Figure 1 shows an embodiment of a device according to the invention. The dotted lines imply the device in an operational deformed state, i.e. the device is subjected to a force from the machining means caused by the linear feeding and resulting in a deformation.
Figure 2 shows an example of a block scheme of a position closed loop configuration according to the invention, which is arranged to control the linear movement of the device. The dotted lines imply the device in an operational deformed state, i.e. the device is subjected to a force from the machining means caused by the linear feeding and resulting in a deformation.
Figure 3 shows the calibration state in the case of the device realised in a centerless grinding machine. The dotted lines imply the device in a deformed state, i.e. the device is subjected to a force from the machining means caused by the linear feeding and resulting in a deformation.

### DESCRIPTION OF A PREFERRED EMBODIMENT

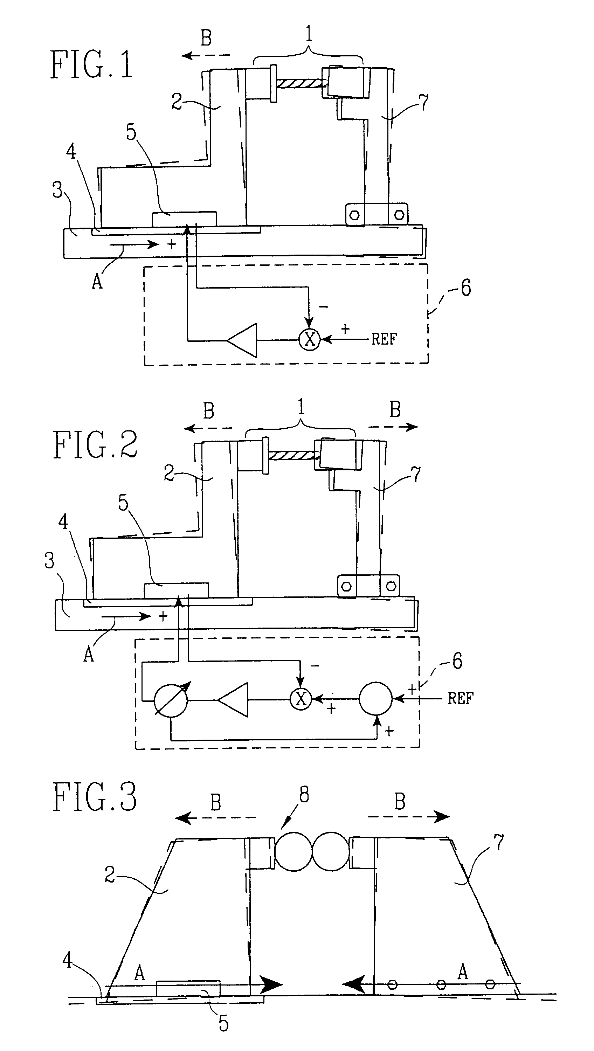

Referring to figure 1, the preferred embodiment of the device firstly comprises machining means 1, which is responsible for the actual machining. The machining means 1 is fixed to a first machine element 2, which is connected to a second machine element 3. It should be noted that the machining means 1 can be fixed directly to the second machine element 3, which comprises at least one feed slide 4 and one linear motor 5 arranged with position feed-back in a position closed loop configuration realised either as a circuit or as a computer program implemented in a general purpose computer. An example of a suitable position closed loop configuration 6 is presented in figure 2. The second machine element 3 can be fixed to the ground or to a third machine element.

The device also compensates for non plastic deformations in the necessary supporting means 7. The object of this means is primarily to facilitate the machining, e.g. to hold the work piece in place during machining. It should be noted that in some applications the supporting means 7 may not be necessary and in others its presence is crucial for obtaining the purpose of the invention, e.g. in centerless grinding processes.

During operation, machine elements 2, 3 and the possible supporting means 7 can be elastically deformed due to forces originating from the machining means 1. The first machine element 2, which includes the machining means 1, is moved by the linear motor 5 in the direction of the arrow A in figure 1. This results in a deformation force marked with a dotted arrow B in figure 1. The present invention only deals with compensation of elastic deformations. The deformations is arranged to be substantially compensated by a linear movement of said second machine element 3. The compensation is effected by at least one linear motor 5, which can be of standard type. The extent of the linear movement is related to current alterations in the winding of the linear motor 5, according to basic laws of magnetism, since the deformation is directly proportional to the force exerted on the machining means 1 and is thereby proportional to the current in the winding of the linear motor 5.

It should be noted that the compensating is primarily intended to be performed on a continuous basis. However, it should be noted that the compensation can also be performed on a non continuous basis. Further, the feed slide 4 and the linear motor 5 are directly connected.

The extent of compensation generated by the position closed loop configuration 6 can be scaled by a compensation factor, which is arranged to be set arbitrarily, but is preferably arranged to be set between 0 and 1. If the factor is set to 0 then there is no compensation at all. If it is set to 1 then there is full compensation of a deformation. A factor greater than 1 results in a negative stiffness in the machining zone. The compensation factor does not necessarily have to be constant. For instance, it can be a function depending on frequency, the current in the windings, the time derivative of the current or characteristics relating to activities or parameters in the machining zone.

If high frequencies are involved then filtering can be necessary.

Before using the device calibration is necessary. The object of the calibration is to find out the characteristics of the first machine element 2, which includes the machining means 1, and possible supporting means 7. This is achieved by bringing the machine into a state in which only the characteristics of the first machine element 2, which includes the machining means 1, and the possible supporting means 7 are involved, i.e. the machine is not loaded with material to process. The next step of the calibration process is to move the machining means 1 to contact the possible supporting means 7. Deformation data relating to the movement and the current in the winding of the linear motor 5 are stored in a memory, e.g. a look-up table, which can be stored in the position closed loop circuit 6. This can be further exemplified in the case of a centerless grinding process as presented in figure 3. Figure 3 shows a grinding means 8 in contact with a supporting means 7 and the forces A and B deform the first machine element 2 and the supporting means 7.

Calibration is normally performed at least once, but can be performed whenever considered necessary. The calibration also takes care of non linear characteristics of the first machine element 2, which includes the machining means 1, and the possible supporting means 7.

## Claims

1. Device for compensating a non plastic deformation of a first machine element (2) and possible supporting means (7), said first machine element (2) at least comprising machining means (1) and being fixed to a second machine element (3) in linear operation at least comprising one feed slide (4) and one linear motor (5),
**characterized in**,
that
said feed slide (4) and linear motor (5) are arranged with position feed-back in a position closed loop configuration (6);
said deformation is arranged to be substantially compensated by a linear movement of said second machine element (3) effected by said linear motor (5); and
the extent of said linear movement being arranged to be based on current alterations in the winding of said linear motor (5), which are caused by forces exerted on said linear motor (5), said forces originating from the deformation of said first machine element (2) and said possible supporting means (7).

2. Device according to claim 1,
**characterized in**,
that said compensation is arranged to be performed on a continuous basis.

3. Device according to claim 1,
**characterized by**,
that said feed slide (4) and said linear motor (5) are directly connected.

4. Device according to claim 1,
**characterized by**,
that said compensation is controlled by a compensation factor, which is arranged to be set arbitrarily, but is preferably arranged to be set between 0 and 1.

5. Method for compensating a non plastic deformation of a first machine element (2) and possible supporting means (7), said first machine element at least comprising machining means (1) and being fixed to a second machine element (3) in linear operation at least comprising one feed slide (4) and one linear motor (5),
**characterized by**,
the steps of:
- generating from a position closed loop configuration (6) the extent of said linear movement based on current alterations in the winding of said linear motor (5), and which current alterations are caused by forces exerted on said linear motor (5), said forces originating from the deformation of said first machine element (2) and said possible supporting means (7),
- substantially compensating for said deformation with said linear movement of said first machine element (2) effected by said linear motor (5),

6. Method for calibrating the device according to claim 1, **characterized by**,
the steps of:
- bringing said device into calibration state,
- displacing said machining means (1) resulting in a deformation of said first machine element (2) and possible supporting means (7),
- storing data relating to said linear movement of said first machine element (2) and the current in the winding of said linear motor (5) in suitable means, which is arranged to transmit said data to said configuration (6).
